# EUROPÄISCHE PATENTSCHRIFT

(11) **EP 0 602 124 B1**
(45) Veröffentlichungstag und Bekanntmachung des Hinweises auf die Patenterteilung: **22.11.1995**
(21) Anmeldenummer: 92918664.1
(22) Anmeldetag: 01.09.1992
(51) Int. Cl.: B60L 15/20

(54) **VORRICHTUNG ZUR EINHALTUNG EINER VORGEWÄHLTEN FAHRTRICHTUNG EINES FAHRZEUGES, INSBESONDERE ELEKTROAUTOS, AN STEIGUNGEN**
DEVICE FOR MAINTAINING A PRESELECTED TRAVELLING DIRECTION OF A VEHICLE, IN PARTICULAR AN ELECTRIC CAR, ON SLOPES
DISPOSITIF PERMETTANT LE MAINTIEN D'UNE DIRECTION DE DEPLACEMENT PRESELECTIONNEE D'UN VEHICULE, EN PARTICULIER UNE AUTO ELECTRIQUE, DANS LES COTES

(30) Priorität: 06.09.1991 EP 91115100
(43) Veröffentlichungstag der Anmeldung: 22.06.1994
(73) Patentinhaber: SIEMENS AKTIENGESELLSCHAFT, 80333 München (DE)
(72) Erfinder: HARBAUER, Werner, D-8702 Kürnach (DE)
(86) Internationale Anmeldenummer: EP9202013
(87) Internationale Veröffentlichungsnummer: WO9304888

(56) Entgegenhaltungen:
- DE-A- 2 411 550
- DE-A- 3 238 196
- PATENT ABSTRACTS OF JAPAN vol. 15, no. 124 (M-1097)(4652) 26. März 1991
- PATENT ABSTRACTS OF JAPAN vol. 15, no. 235 (M-1125)(4763) 17. Juni 1991
- PATENT ABSTRACTS OF JAPAN vol. 7, no. 112 (M-215)(1257) 17. Mai 1983

## Beschreibung

Die Erfindung bezieht sich auf eine Vorrichtung zur Einhaltung einer vorgewählten Fahrtrichtung für ein Elektroauto an Steigungen gemäß Anspruch 1.

Durch die DE-A1-24 11 550 ist es zur automatischen Anfahrsteuerung eines Fahrzeuges an Steigungen bekannt, nach einem Halt in einer Steigungsstrecke ohne Zurückrollen durch eine Zusatzeinrichtung unter Berücksichtigung des Fahrzeuggewichtes die Jeweils in einer Steigung wirkende Hangabtriebskraft zu ermitteln und daraus eine der Rückrollkraft entgegenwirkende Bremskraft zum Gegensteuern des Fahrmotors zu errechnen.

Durch die JP-A-30 11 901 ist es zur Verbesserung des Fahrgefühl in einem Elektroauto beim Befahren von Steigungen bekannt, in Abhängigkeit von einem Vergleich von Ist- und Sollgeschwindigkeit sowie Ist- und Soll-Drehrichtung bei Gefahr eines Rückrollens über den Elektromotor entsprechend gegenzusteuern.

Durch die DE-A1-32 38 196 ist es bekannt, bei einem üblichen Fahrzeug mit Verbrennungsmotor und Getriebeautomatik den Fahrer von der Notwendigkeit der jeweils notwendigen Bremspedalbetätigung bei stillstand des Fahrzeugs mit laufendem Verbrennungsmotor, d.h. bei einem sogenannten Ampelhalt, dadurch zu entlasten, daß die Bremsanlage bei Unterschreiten einer Mindestgeschwindigkeit automatisch betätigt und bei Betätigung des Gaspedals, d.h. beim Wiederanfahren, wieder gelöst wird.

Eine demgegenüber mit einfacheren Mitteln, insbesondere mit geringerem Regelaufwand und trotzdem gewährleisteter Betriebstüchtigkeit, bei Fahrbereitschaft des Fahrzeuges, d.h. in der Regel nach Einschaltbetätigung des Zündschlüssels, ständig wirksame Einhaltung einer vorgewählten Fahrtrichtung läßt sich durch die Lehre des Anspruchs 1 erreichen.

Die Erfindung wird im folgenden anhand einer schematisch in Form eines Blockschaltbildes dargestellten Vorrichtung zur Einhaltung einer vorgewählten Fahrtrichtung bei einem Elektroauto beschrieben.

Ein über eine Antriebsmechanik 5, insbesondere ein Getriebe, die Antriebsräder 6 eines Elektroautos antreibender Fahrmotor 1 wird aus einer Batterie 7 mit einer Ladeeinrichtung 8 gespeist und hinsichtlich seines jeweiligen Momentes über ein Fahrpedal 4 und/oder eine Regelvorrichtung 3 mittels einer Vorrichtung 2 gesteuert bzw. geregelt.

An die Istwert-Eingänge der Regelvorrichtung 3 sind angeschlossen ein Ruhestellungs-Sensor 4.1, durch den die Regelvorrichtung 3 immer dann aktiviert ist, wenn das Fahrzeug in Fahrbereitschaft und das Fahrpedal 4 nicht betätigt sind, weiterhin ein Fahrtrichtungssensor 5.1, durch den eine, z.B. durch ein Getriebe, vorgewählte Fahrrichtung an die Regelvorrichtung 3 gemeldet wird, sowie ein Drehrichtungs-Sensor 1.1 und ein Drehzahl-Sensor 1.2, durch die jeweils die augenblickliche Drehrichtung und damit die Fahrtrichtung des Fahrzeuges und die augenblickliche Drehzahl und damit die Fahrgeschwindigkeit des Fahrzeuges erfaßt und an die Regelvorrichtung 3 weitergegeben werden. Die Drehrichtungs- und die Drehzahlistwerterfassung können auch in einem einzigen Sensor zusammengefaßt sein und/oder auch alternativ durch einen den Antriebsrädern 6 zugeordneten Sensor 6.1 erfolgen. In vorteilhafter Weise ist dem elektrischen Fahrmotor 1 zusätzlich ein Sensor 1.3 zur Überwachung der Motortemperatur zugeordnet, um z.B. eine Motorüberhitzung aufgrund einer zu langen Schleichdrehzahlstellung zur Einhaltung der vorgewählten Fahrtrichtung und damit als Rückrollsicherung zu verhindern.

Die grundsätzliche Wirkungsweise der erfindungsgemäßen Vorrichtung zur Einhaltung einer vorgewählten Fahrtrichtung an einer Steigung und somit einer Rückrollsicherung durch entsprechende Gegensteuerung läßt sich wie folgt zusammenfassen:
Die Vorrichtung ist mit beginnender Fahrbereitschaft, z.B. durch Einschalten des Zündschlüssels, wirksam. Durch die entsprechenden Sensoren 1.1 bzw. 6.1 wird die Drehrichtung erfaßt und mit der durch den Sensor 5.1 vorgewählten Drehrichtung in der Regelvorrichtung 3 auf Übereinstimmung geprüft, gleichzeitig wird dort die durch die Sensoren 1.2 bzw. 6.1 abgefragte Drehzahl auf Unterschreiten eines vorgebbaren Schwellwertes überwacht.

Falls bei nicht betätigtem Fahrpedal 4 und einer entsprechenden Istwertmeldung an die Regelvorrichtung 3 durch den Sensor 4.1 einerseits Ist-Drehrichtung und Soll-Drehrichtung nicht übereinstimmen und andererseits die Ist-Drehzahl einen vorgegebenen Schwellwert erreicht bzw. unterschreitet, wird über die Regelvorrichtung 3 dem Fahrmotor 1 Energie im Sinne einer geringen Schleich-Drehzahl in Richtung der gewählten Fahrtrichtung zugeführt.

Die beschriebene Überwachung bzw. Regelung erfolgt kontinuierlich in kurzen Zeitabständen.

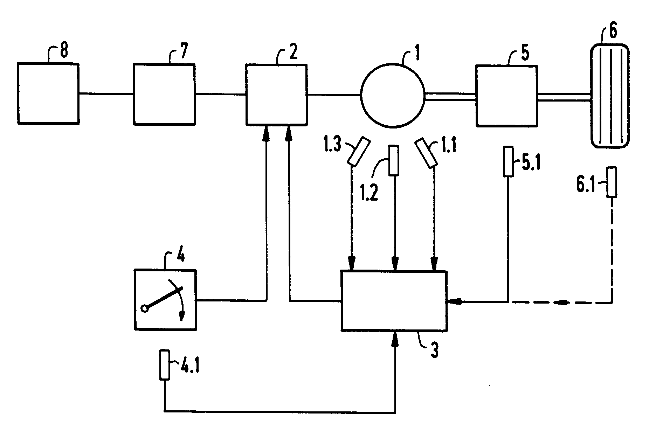

## Patentansprüche

1. Vorrichtung zur Einhaltung einer vorgewählten Fahrtrichtung für ein Elektroauto an Steigungen mit den Merkmalen:
a) Eine Regelvorrichtung (3) ist in Einschaltabhängigkeit von der Ruhestellung eines die Beschleunigung bzw. Geschwindigkeit des Fahrzeuges über einen Fahrmotor (1) bestimmenden Fahrpedals (4) stellbar;
b) die Regelvorrichtung (3) ist in Steuerabhängigkeit von der Differenz zwischen der Istgeschwindigkeit und einer vorgebbaren Sollgeschwindigkeit des Fahrzeuges stellbar;
c) die Regelvorrichtung (3) ist in Steuerabhängigkeit von einer Drehrichtungsüberwachung des Fahrmotors (1) bzw. eines Antriebsrades (6) oder dergleichen stellbar;
d) die Regelvorrichtung (3) ist in Steuerverbindung zu dem Fahrmotor (1) im Sinne des Einhaltens einer geringen Fahrgeschwindigkeit in der vorgesehenen Fahrtrichtung stellbar.

2. Vorrichtung zur Einhaltung einer vorgewählten Fahrtrichtung nach Anspruch 1 mit dem Merkmal:
e) Die Regelvorrichtung (3) ist kontinuierlich in kurzen Zeitabständen in Einschaltabhängigkeit bzw. Steuerverbindung gestellt.

## Claims

1. Device for maintaining a preselected direction of travel for an electric car on inclines, with the following features:
a) a control device (3) is actuable as a switch-on function of the inoperative position of an accelerator pedal (4) which determines, via a propelling motor (1), the acceleration and speed of the vehicle;
b) the control device (3) is actuable as a control function of the difference between the actual speed and a presettable desired speed of the vehicle;
c) the control device (3) is actuable as a control function of the monitoring of the direction of rotation of the propelling motor (1) or of a driving wheel (6) or the like;
d) the control device (3) is actuable as a control connection with respect to the propelling motor (1) for the purpose of maintaining a low driving speed in the intended direction of travel.

2. Device for maintaining a preselected direction of travel according to Claim 1, having the following feature:
e) the control device (3) is continuously actuated at short intervals as a switch-on function or control connection.

## Revendications

1. Dispositif pour maintenir une direction présélectionnée de déplacement pour une automobile électrique dans des côtes, présentant les caractéristiques suivantes :
a) un dispositif de régulation (3) est réglable de sorte que son activation est commandée en fonction pour la position de repos d'une pédale d'accélérateur (4) déterminant l'accélération ou la vitesse du véhicule par l'intermédiaire d'un moteur d'entraînement (1);
b) le dispositif de régulation (3) est réglable d'une manière commandée en fonction de la différence entre la vitesse réelle et une vitesse de consigne pouvant être prédéterminée du véhicule;
c) le dispositif de régulation (3) est réglable d'une manière commandée en fonction d'un contrôle du sens de rotation du moteur d'entraînement (1) ou d'un essieu moteur (6) ou analogue;
d) le dispositif de régulation (3) est réglable en étant relié selon une liaison de commande au moteur d'entraînement (1) dans le sens du respect d'une faible vitesse de déplacement dans le sens de déplacement prévu.

2. Dispositif pour maintenir un sens présélectionné de déplacement suivant la revendication 1, présentant la caractéristique suivante :
e) le dispositif de régulation (3) est placé continûment, pendant de brefs intervalles de temps, dans une relation de dépendance d'activation ou de liaison de commande.
